# EUROPEAN PATENT SPECIFICATION

(11) **EP 3 765 286 B1**
(45) Date of publication and mention of the grant of the patent: **21.12.2022**
(21) Application number: 19717008.7
(22) Date of filing: 07.03.2019
(51) Int. Cl.: B32B 27/08, B32B 27/18, B32B 27/30, B32B 27/32, B32B 27/34

(54) **LAMINATE FILM, PACKAGE, AND METHODS FOR OXYGEN-SENSITIVE MATERIALS**
MEHRSCHICHTFOLIE, VERPACKUNG UND VERFAHREN FÜR SAUERSTOFFEMPFINDLICHE MATERIALIEN
FILM STRATIFIÉ, EMBALLAGE ET PROCEDÉS POUR MATÉRIAUX SENSIBLES À L'OXYGÈNE

(30) Priority: 15.03.2018 US 201862643220 P
(43) Date of publication of application: 20.01.2021
(73) Proprietor: AdvanSix Resins & Chemicals LLC, Parsippany, New Jersey 07054 (US)
(72) Inventor: PORTER, Simon J., Parsippany, New Jersey 07054 (US); TING, Yuan-Ping Robert, Parsippany, New Jersey 07054 (US)
(74) Representative: Crooks, Elizabeth Caroline
(86) International application number: PCT/US2019/021159
(87) International publication number: WO 2019/177865

(56) References cited:
- EP-A1- 2 444 458
- EP-A1- 2 725 066
- WO-A1-02/072350
- US-A1- 2007 154 668

## Description

### CROSS REFERENCE TO RELATED APPLICATIONS

This application claims the benefit of U.S. Provisional Patent Application Serial No. 62/643,220, filed March 15, 2018, entitled LAMINATE FILM, PACKAGE, AND METHODS FOR OXYGEN-SENSITIVE MATERIALS.

### FIELD

The present disclosure relates to laminate films for oxygen-sensitive materials. In particular, the present disclosure relates to laminate films including polyamides. The laminate films are useful for sterilizing heat treatment applications.

### BACKGROUND

Heat treatments, such as a retort process, are commonly used to sterilize packaged materials including oxygen-sensitive materials, for example, packaged food or pharmaceuticals. In a typical process, the material is placed inside a package formed of a laminate film and then sealed to form, for example, a retort pouch. The sealed retort pouch is sterilized by the heat treatment, such as at 2 atmospheres of steam at about 121°C for 30 minutes.

A typical laminate film used in retort processes includes layers of polypropylene and ethylene vinyl alcohol (EVOH) polymers. The EVOH polymer layers may be included as an oxygen barrier layer to prevent oxidation of the material inside the pouch.

However, during the retort process, the elevated temperature and high moisture content of the heat treatment causes the EVOH polymer to decrystallize, compromising the ability of the EVOH polymer layer to act as an oxygen barrier. This phenomenon, known as "retort shock," can result in the loss of oxygen barrier properties until the EVOH polymer layer dries out and recrystallizes. The recovery of the oxygen barrier properties of the EVOH polymer layer can take 7 days up to 1 month. During this recovery time, the oxygen allowed past the EVOH polymer layer can react with the oxygen-sensitive materials, reducing the shelf-life of the oxygen-sensitive materials.

Improvements in the foregoing are desired.

US2007/0154668 discloses a high gas barrier, delamination-resistant polyamide composition, suitable for extended shelf-life packaging applications, where the polyamide compsitions comprise mXDA-IPA containing copolymers.

EP2444458 discloses a oxygen-absorbing resin composition containing a polyolefin resin, a transition metal catalyst and a polyamide resin obtained by polycondensation of aromatic diamide and dicarboxylic acid, wherein the end amino group concentration fo the polyamide resin is 30µeq/g or less and the total content of the transition metal catalyst and the polyamide resin is 15 to 60% by weight based on a whole amount of the oxygen-absorbing resin composition.

### SUMMARY

**The** present invention provides a method of making a sterilized package containing an oxygen-sensitive material, the method comprising: providing a package, the package including a laminate film including an ethylene vinyl alcohol polymer layer and an oxygen scavenging layer, the oxygen scavenging layer including a blend of a first polyamide including a crystallizable polyamide homopolymer, a crystallizable polyamide copolymer, or a blend thereof; and a second polyamide including an m-xylylene diamine moiety, an isophthalic acid moiety, and a polyamide monomeric diacid precursor moiety; and a metal salt catalyst; sealing the oxygen-sensitive material in the package; exposing the sealed package to a heat treatment to sterilize the package and the oxygen-sensitive material in the package; and cooling the sterilized package.

The present invention further provides a package for storing oxygen-sensitive materials, the package comprising: a laminate film separating an interior of the package from an exterior of the package, the laminate film including: an ethylene vinyl alcohol polymer layer; and an oxygen scavenging layer, the oxygen scavenging layer including a blend of: a first polyamide including a crystallizable polyamide homopolymer, a crystallizable polyamide copolymer, or a blend thereof; a second polyamide including: an m-xylylene diamine moiety; an isophthalic acid moiety; and a polyamide monomeric diacid precursor moiety; and a metal salt catalyst; wherein the package is a retort pouch.

The laminate film is provided for protecting oxygen-sensitive materials. The laminate film includes an ethylene vinyl alcohol polymer layer and an oxygen scavenging layer. The oxygen scavenging layer includes a first polyamide, a second polyamide, and a metal salt catalyst. The first polyamide includes a crystallizable polyamide homopolymer, a crystallizable polyamide copolymer, or a blend thereof. The second polyamide includes an m-xylylene diamine moiety, an isophthalic acid moiety, and a polyamide monomeric diacid precursor moiety.

The second polyamide of the laminate film may include 20 mol. % to 70 mol. % of the m-xylylene diamine moiety, 1 mol. % to 30 mol. % of the isophthalic acid moiety, and 20 mol. % to 60 mol. % of the polyamide monomeric diacid precursor moiety. The first polyamide of the laminate film may include at least one of: Nylon 6, Nylon 66, Nylon 6/66, Nylon 66/6, Nylon MXD6, and Nylon 61, 6T. The polyamide monomeric diacid precursor moiety of the laminate film may include an adipic acid moiety, and a molar ratio of the adipic acid moiety to the isophthalic acid moiety ranges from 98:1 to 88:12. The first polyamide of the laminate film may be from 2 wt. % to 90 wt. % of the oxygen scavenging layer and the second polyamide may be from 10 wt. % to 98 wt. % of the oxygen scavenging layer. The metal salt catalyst of the laminate film may include an acetate, stearate, propionate, hexanoate, octanoate, benzoate, salicylate or cinnamate of cobalt, copper, or ruthenium.

The laminate film may further include a polyamide layer disposed on a first side of the ethylene vinyl alcohol layer, wherein the polyamide layer includes a third polyamide, and the oxygen scavenging layer is disposed on a second side of the ethylene vinyl alcohol layer opposite the first side of the ethylene vinyl alcohol layer. The third polyamide of the laminate film may include at least one of: Nylon 6, Nylon 66, Nylon 6/66, Nylon 66/6, Nylon MXD6, and Nylon 61, 6T.

The laminate film may further include a first polyolefin layer bonded to a side of the polyamide layer opposite the ethylene vinyl alcohol polymer layer by a first tie layer, and a second polyolefin layer bonded to a side of the oxygen scavenging layer opposite the ethylene vinyl alcohol polymer layer by a second tie layer.

The present disclosure provides a package for storing oxygen-sensitive materials. The package includes a laminate film separating an interior of the package from an exterior of the package. The laminate film includes an ethylene vinyl alcohol polymer layer and an oxygen scavenging layer. The oxygen scavenging layer including a blend of a first polyamide, a second polyamide, and a metal salt catalyst. The first polyamide includes a crystallizable polyamide homopolymer, a crystallizable polyamide copolymer, or a blend thereof. The second polyamide includes an m-xylylene diamine moiety, an isophthalic acid moiety, and a polyamide monomeric diacid precursor moiety.

The second polyamide of the package may include 20 mol. % to 70 mol. % of the m-xylylene diamine moiety, 1 mol. % to 30 mol. % of the isophthalic acid moiety, and 20 mol. % to 60 mol. % of the polyamide monomeric diacid precursor moiety. The laminate film of the package may further include a polyamide layer disposed on a first side of the ethylene vinyl alcohol layer, wherein the polyamide layer includes a third polyamide, and the oxygen scavenging layer is disposed on a second side of the ethylene vinyl alcohol layer opposite the first side of the ethylene vinyl alcohol layer. The laminate film of the package may further include a first polyolefin layer bonded to a side of the polyamide layer opposite the ethylene vinyl alcohol polymer layer by a first tie layer, and a second polyolefin layer bonded to a side of the oxygen scavenging layer opposite the ethylene vinyl alcohol polymer layer by a second tie layer. The package may be a retort pouch.

The present disclosure provides a method of making a sterilized package containing an oxygen-sensitive material. The method includes providing a package, sealing the oxygen-sensitive material in the package, exposing the sealed package to a heat treatment to sterilize the package and the oxygen-sensitive material in the package, and cooling the sterilized package. The package includes a laminate film including an ethylene vinyl alcohol polymer layer and an oxygen scavenging layer. The oxygen scavenging layer includes a blend of a first polyamide, a second polyamide, and a metal salt catalyst. The first polyamide includes a crystallizable polyamide homopolymer, a crystallizable polyamide copolymer, or a blend thereof. The second polyamide includes an m-xylylene diamine moiety, an isophthalic acid moiety, and a polyamide monomeric diacid precursor moiety.

The heat treatment of the method may be at a temperature from 50°C to 150°C, a relative humidity of 90% to 100%, and a pressure of 600 Torr to 3,600 Torr absolute for a time from 30 to 60 minutes. Exposing the sealed package to the heat treatment may cause a loss of crystallinity in the ethylene vinyl alcohol polymer layer, and the oxygen scavenging layer may scavenge oxygen passing through the laminate film at least until the ethylene vinyl alcohol polymer layer recrystallizes. The heat treatment of the method may activate the oxygen scavenging layer. The second polyamide of the sterilized package made by the method may include 20 mol. % to 70 mol. % of the m-xylylene diamine moiety, 1 mol. % to 30 mol. % of the isophthalic acid moiety, and 20 mol. % to 60 mol. % of the polyamide monomeric diacid precursor moiety. An oxygen transmission rate of the sterilized package made by the method measured per ASTM D3985 through the laminate film 24 hours after cooling the sterilized package may be less than 0.3 cc/m² per day.

### BRIEF DESCRIPTION OF THE DRAWINGS

FIG. 1 is a schematic illustration of a package for storing oxygen-sensitive materials, according to this disclosure.
FIG. 2 is a schematic cross-section of a laminate film for use in the package of FIG. 1, according to this disclosure.
FIG. 3 is a schematic cross-section of another laminate film for use in the package of FIG. 1, according to this disclosure.
FIG. 4 is a graph of an oxygen transmission rate as a function of time after a heat treatment for a laminate film, according to this disclosure.
FIG. 5 is a graph of is a graph comparing oxygen transmission rates after a heat treatment of a laminate film, according to this disclosure, and a laminate control film.
FIG. 6 is a graph of oxygen absorption as a function of time before and after a heat treatment for an oxygen scavenging layer with a high concentration of a metal salt catalyst for use in a laminate film, according to this disclosure.
FIG. 7 is a graph of oxygen absorption as a function of time before and after a heat treatment for an oxygen scavenging layer with a low concentration of a metal salt catalyst for use in a laminate film, according to this disclosure.
FIG. 8 is a graph of oxygen absorption as a function of time for oxygen scavenging layers with various concentrations of oxidizable Nylon and metal salt catalyst, and without polybutadiene, according to this disclosure and compared to an oxygen scavenging layer including polybutadiene.

The above mentioned and other features of the invention, and the manner of attaining them, will become more apparent and the invention itself will be better understood by reference to the following description of the invention taken in conjunction with the accompanying drawings.

### DETAILED DESCRIPTION

The present disclosure describes a laminate film including an ethylene vinyl alcohol (EVOH) polymer layer and an oxygen scavenging layer. Once sealed, a package formed of the laminate film can be subjected to a heat treatment to sterilize the package and any oxygen sensitive materials sealed within. As described above, heat and humidity from the heat treatment can decrystallize the EVOH polymer layer, rendering it ineffective as an oxygen barrier until it dries out and recrystallizes days or weeks later. The heat and humidity from the heat treatment can activate the oxygen scavenging layer so that it can absorb oxygen passing through the laminate film. The oxygen scavenging layer can be sufficient to continue to absorb oxygen at least until the EVOH polymer layer recrystallizes and its oxygen barrier properties are restored. As a result, less oxygen is present within the package to react with the oxygen-sensitive materials within, which may increase the shelf-life of the oxygen-sensitive materials. The oxygen scavenging layer may additionally be sufficient to continue to absorb oxygen well after the EVOH polymer layer has recrystallized in order to remove headspace oxygen from the package which may further increase the shelf-life of the oxygen-sensitive materials.

The laminate films and packages formed of the laminate films as described according to this disclosure have been found to be stable when stored at ambient temperatures prior to use. That is, the oxygen scavenging capability does not deteriorate when the laminate films are stored, for example, in roll form for extended periods of time. Without wishing to be bound by any theory, it is believed that oxygen scavenging materials in the oxygen scavenging layer require both good oxygen permeation and high humidity to start the oxygen scavenging reaction. In storage prior to use, the EVOH polymer layer can limit the oxygen permeation to the oxygen permeation layer, preserving the oxygen scavenging material. In roll form, the first outer layers of the roll can act as an oxygen barrier. The laminate roll may be wrapped with a metalized film or fil laminate to protect the laminate roll from moisture, eliminating the humidity necessary for activating the oxygen scavenging layer.

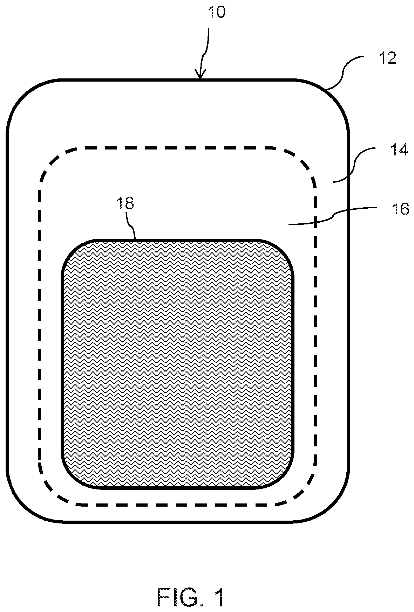

FIG. 1 is schematic illustration of a package for storing oxygen-sensitive materials, according to this disclosure. FIG. 1 shows a package 10 including a laminate film 12, a sealed portion 14, and an interior 16. In the package 10 shown in FIG. 1, two laminate films 12 (one shown) have been bonded together at the sealed portion 14 to form the package 10. The sealed portion 14 surrounds and defines the interior 16. The laminate films 12 can be bonded together by, for example, heat welding, sonic welding, or adhesive bonding. Part of the sealed portion 14 may be formed, such as on three sides of the package 10, leaving a fourth side open for inserting an oxygen-sensitive material 18 into the interior 16, and the fourth side sealed after inserting the oxygen-sensitive material 18, as shown in FIG. 1. A portion of the interior 16 not occupied by the oxygen-sensitive material 18 is a headspace of the package 10.

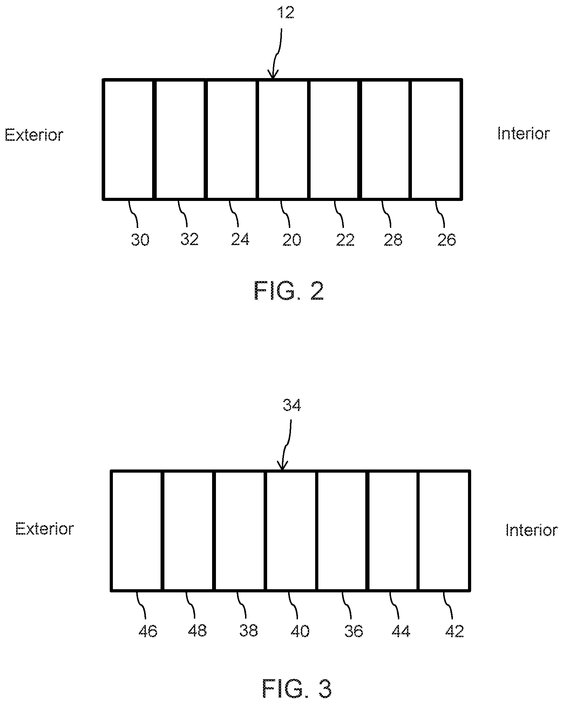

FIG. 2 is a schematic cross-section of the laminate film 12 for use in the package 10 of FIG. 1, according to this disclosure. FIG. 2 shows that the laminate film 12 includes an ethylene vinyl alcohol (EVOH) polymer layer 20, an oxygen scavenging layer 22, a polyamide layer 24, a first polyolefin layer 26, a first tie layer 28, a second polyolefin layer 30, and a second tie layer 32.

The EVOH polymer layer 20 is a layer of a copolymer of ethylene and vinyl alcohol. Ethylene moieties in the EVOH polymer layer 20 as a mole percentage (mol. %) of the EVOH polymer layer 20 may be as little as 24 mol. %, 26 mol. %, 28 mol. %, 30 mol. %, 32 mol. %, or 34 mol. %, or as great as 37 mol. %, 40 mol. %, 43 mol.%, 46 mol. %, or 50 mol.%, or may be within any range defined between any two of the foregoing values, such as 24 mol.% to 50 mol.%, 26 mol.% to 46 mol.%, 28 mol.% to 43 mol.%, 30 mol.% to 40 mol.%, 32 mol.% to 37 mol.% or 28 mol.% to 32 mol.%, for example.

An average thickness of the EVOH polymer layer 20 may be as little as 2.5 microns, 3 microns, 4 microns, 5 microns, 6 microns, or 8 microns, or as great as 10 microns, 12 microns, 15 microns, 20 microns, or 25 microns, or may be within any range defined between any two of the foregoing values, such as 2.5 microns to 25 microns, 3 microns to 20 microns, 4 microns to 15 microns, 5 microns to 12 microns, 6 microns to 10 microns, or 10 microns to 15 microns, for example.

Suitable copolymers of ethylene and vinyl alcohol can be prepared by the methods disclosed in U.S. Pat. Nos. 3,510,464; 3,560,461; 3,847,845; and 3,585,177.

The oxygen scavenging layer 22 can include a first polyamide, a second polyamide, and a metal salt catalyst. The first polyamide can include a crystallizable polyamide homopolymer, crystallizable polyamide copolymer, or a blend thereof selected from aliphatic polyamides, aliphatic/aromatic polyamides and mixtures thereof. The aliphatic polyamides and aliphatic/aromatic polyamides may have a molecular weight of from about 10,000 to about 100,000.

A thickness of the oxygen scavenging layer 22 may be as little as 2.5 microns, 5 microns, 7.5 microns, 10 microns, 12.5 microns, or 15 microns, or as great as 20 microns, 25 microns, 30 microns, 40 microns, or 50 microns, or may be within any range defined between any two of the foregoing values, such as 2.5 microns to 50 microns, 5 microns to 40 microns, 7.5 microns to 30 microns, 10 microns to 25 microns, 12.5 microns to 20 microns, 5 microns to 25 microns, or 7.5 microns to 15 microns, for example.

The aliphatic polyamides may include homopolymers such as, for example, poly(4-aminobutyric acid) (Nylon 4), poly(6-aminohexanoic acid) (Nylon 6, also known as poly(caprolactam)), poly(7-aminoheptanoic acid) (Nylon 7), poly(8-aminooctanoic acid)(Nylon 8), poly(9-aminononanoic acid) (Nylon 9), poly(10-aminodecanoic acid) (Nylon 10), poly(11-aminoundecanoic acid) (Nylon 11), poly(12-aminododecanoic acid) (Nylon 12), Nylon 4,6, poly(hexamethylene adipamide) (Nylon 6,6), poly(hexamethylene sebacamide) (Nylon 6,10), poly(heptamethylene pimelamide) (Nylon 7,7), poly(octamethylene suberamide) (Nylon 8,8), poly(hexamethylene azelamide) (Nylon 6,9), poly(nonamethylene azelamide) (Nylon 9,9), poly(decamethylene azelamide) (Nylon 10,9), poly(tetramethylenediamine-co-oxalic acid) (Nylon 4,2), the polyamide of n-dodecanedioic acid and hexamethylenediamine (Nylon 6,12), the polyamide of dodecamethylenediamine and n-dodecanedioic acid (Nylon 12,12).

The aliphatic polyamides may include copolymers such as, for example, caprolactam/hexamethylene adipamide copolymer (Nylon 6,6/6), hexamethylene adipamide/caprolactam copolymer (Nylon 6/6,6), trimethylene adipamide/hexamethylene azelaiamide copolymer (Nylon trimethyl 6,2/6,2), hexamethylene adipamide-hexamethylene-azelaiamide caprolactam copolymer (Nylon 6,6/6,9/6). Also included are other Nylons which are not particularly delineated here.

The aliphatic/aromatic polyamides may include poly(tetramethylenediamine-co-isophthalic acid) (Nylon 4,I), polyhexamethylene isophthalamide (Nylon 6,I), hexamethylene adipamide/hexamethylene-isophthalamide (Nylon 6,6/61), hexamethylene adipamide/hexamethyleneterephthalamide (Nylon 6,6/6T), poly (2,2,2-trimethyl hexamethylene terephthalamide), poly(m-xylylene adipamide) (MXD6), poly(p-xylylene adipamide), poly(hexamethylene terephthalamide), poly(dodecamethylene terephthalamide), polyamide 6I/6T, polyamide 6T/6I, polyamide 6/MXDT/I, polyamide MXDI. Blends of two or more aliphatic/aromatic polyamides can also be used. Aliphatic/aromatic polyamides can be prepared by known preparative techniques or can be obtained from commercial sources. Other suitable polyamides are described in U.S. Pat. Nos. 4,826,955 and 5,541,267.

The first polyamide may include Nylon 6, Nylon 66, Nylon 6/66, Nylon 66/6, Nylon MXD6, or Nylon 6I,6T or mixtures thereof. The first polyamide may include Nylon 6, Nylon 66, Nylon 6/66 or 66/6 and mixtures thereof.

Polyamides used in the practice of this invention may be obtained from commercial sources or prepared in accordance with known preparatory techniques. For example, poly(caprolactam) can be obtained from AdvanSix, Parsippany, N.J. under the trademark AEGIS^{®}.

General procedures useful for the preparation of polyamides are well known to the art. Such procedures can include the reaction of diacids with diamines. Useful diacids for making polyamides include dicarboxylic acids which are represented by the general formula:

HOOC-Z-COOH

wherein Z is representative of a divalent aliphatic radical containing at least 2 carbon atoms, such as adipic acid, sebacic acid, octadecanedioic acid, pimelic acid, suberic acid, azelaic acid, dodecanedioic acid, and glutaric acid. The dicarboxylic acids may be aliphatic acids, or aromatic acids such as isophthalic acid and terephthalic acid.

Useful diamines for making polyamides include those having the formula:

H₂N(CH₂)ₙNH₂

wherein n has an integer value of 1-16, and includes such compounds as trimethylenediamine, tetramethylenediamine, pentamethylenediamine, hexamethylenediamine, octamethylenediamine, decamethylenediamine, dodecamethylenediamine, hexadecamethylenediamine, aromatic diamines such as p-phenylenediamine, 4,4'-diaminodiphenyl ether, 4,4'-diaminodiphenyl sulphone, 4,4'-diaminodiphenylmethane, alkylated diamines such as 2,2-dimethylpentamethylenediamine, 2,2,4-trimethylhexamethylenediamine, and 2,4,4 trimethylpentamethylenediamine, as well as cycloaliphatic diamines, such as diaminodicyclohexylmethane, and other compounds. Other useful diamines include heptamethylenediamine, nonamethylenediamine.

The second polyamide can include an m-xylylene diamine moiety, an isophthalic acid moiety, and at least one additional moiety including a polyamide monomeric precursor. The second polyamide may include a semi-crystalline polyamide copolymer having the m-xylylene diamine moiety (mXDA), the isophthalic acid (IPA) moiety and at least one additional moiety including the polyamide monomeric precursor. The additional polyamide monomeric precursor moiety of the mXDA-IPA copolymers can include a dicarboxylic acid (diacid) as described above. The additional polyamide monomeric precursor moiety may include an aliphatic dicarboxylic acid such as adipic acid, sebacic acid, octadecanedioic acid, pimelic acid, suberic acid, azelaic acid, dodecanedioic acid and glutaric acid. The additional polyamide monomeric precursor moiety may consist of adipic acid.

The m-xylylene diamine moiety in the second polyamide may be as little as 20 mol. %, 25 mol. %, 30 mol. %, 35 mol. %, 40 mol. % or 45 mol. %, or as great as 50 mol. %, 55 mol. %, 60 mol. %, 65 mol. %, or 70 mol. %, or may be within any range defined by any two of the foregoing values, such as 20 mol. % to 70 mol. %, 25 mol. % to 65 mol. %, 30 mol. % to 60 mol. %, 35 mol. % to 55 mol. %, 40 mol. % to 50 mol. %, 40 mol. % to 60 mol. %, or 45 mol. % to 55 mol. %, for example.

The isophthalic acid moiety in the second polyamide may be as little as 1 mol. %, 2 mol. %, 3 mol. %, 4 mol. %, 5 mol. % or 6 mol. %, or as great as 12 mol. %, 15 mol. %, 18 mol. %, 20 mol. %, 25 mol. %, or 30 mol. %, or may be within any range defined by any two of the foregoing values, such as 1 mol. % to 30 mol. %, 2 mol. % to 25 mol. %, 3 mol. % to 20 mol. %, 4 mol. % to 18 mol. %, 5 mol. % to 15 mol. %, 6 mol. % to 12 mol. %, 3 mol. % to 15 mol. %, or 4 mol. % to 12 mol. %, for example.

The polyamide monomeric precursor moiety in the second polyamide may be as little as 20 mol. %, 22 mol. %, 24 mol. %, 26 mol. %, 28 mol. %, 30 mol. %, or 35 mol. %, or as great as 40 mol. %, 45 mol. %, 50 mol. %, 55 mol. %, or 60 mol. %, or may be within any range defined by any two of the foregoing values, such as 20 mol. % to 60 mol. %, 24 mol. % to 55 mol. %, 26 mol. % to 50 mol. %, 30 mol. % to 45 mol. %, 35 mol. % to 40 mol. %, 30 mol. % to 50 mol. %, or 35 mol. % to 45 mol. %, for example.

The second polyamide may include from about 20 mol. % to about 70 mol. % of the m-xylylene diamine moiety, from about 1 mol. % to about 30 mol. % of the isophthalic acid moiety, and from about 20 mol. % to about 60 mol. % of the polyamide monomeric precursor moiety. The second polyamide may include from about 40 mol. % to about 60 mol. % of the m-xylylene diamine moiety, from about 3 mol. % to about 15 mol. % of the isophthalic acid moiety, and from about 30 mol. % to about 50 mol. % of the polyamide monomeric precursor moiety. The second polyamide may include from about 45 mol. % to about 55 mol. % of the m-xylylene diamine moiety, from about 4 mol. % to about 12 mol. % of the isophthalic acid moiety, and from about 35 mol. % to about 45 mol. % of the polyamide monomeric precursor moiety. Each of the first and second polyamides may be formed using techniques that are well known in the art.

A molar ratio of the diacid moiety to the isophthalic acid moiety may be as great as 99:1, 98:1, 98:2, 95:5, as little as 92:8, 90:10, 88:12, 85:15, or may be within any range defined between any two of the foregoing values, such as 99:1 to 85:15 or 98:1 to 88:12, for example.

It is believed that if the molar ratio of the diacid moiety to the isophthalic acid moiety is too large, the resulting film may crystalize too quickly, resulting in a film that is not as clear as films of this disclosure. It is also believed that if the molar ratio of the diacid moiety to the isophthalic acid moiety is too small, the film will polymerize too slowly for efficient production of a laminate film, such as laminate film 12.

The first polyamide may be present in the oxygen scavenging layer 22 in as little as 2 wt. %, 5 wt. %, 10 wt. %, 15 wt. %, 20 wt. %, 25 wt. %, 30 wt. %, or 35 wt. %, or as great as 40 wt. %, 45 wt. %, 50 wt. %, 60 wt. %, 70 wt. %, 80 wt. %, or 90 wt. %, or may be within any range defined by any two of the foregoing values, such as 2 wt. % to 90 wt. %, 5 wt. % to 80 wt. %, 10 wt. % to 70 wt. %, 15 wt. % to 60 wt. %, 20 wt. % to 50 wt. %, 25 wt. % to 45 wt. %, 30 wt. % to 40 wt. %, 5 wt. % to 45 wt. %, or 5 wt. % to 15 wt. %, for example.

The second polyamide may be present in the oxygen scavenging layer 22 in as little as 10 wt. %, 20 wt. %, 30 wt. %, 40 wt. %, 50 wt. %, 55 wt. %, 60 wt. %, or 65 wt. %, or as great as 70 wt. %, 75 wt. %, 80 wt. %, 85 wt. %, 90 wt. %, 95 wt. %, 97 wt. %, or 98 wt. %, or may be within any range defined by any two of the foregoing values, such as 10 wt. % to 98 wt. %, 20 wt. % to 95 wt. %, 30 wt. % to 90 wt. %, 40 wt. % to 85 wt. %, 50 wt. % to 80 wt. %, 55 wt. % to 75 wt. %, 60 wt. % to 70 wt. %, 10 wt. % to 60 wt. %, or 85 wt. % to 95 wt. %, for example.

The first polyamide may be present in the oxygen scavenging layer 22 from about 2 weight percent (wt. %) to about 900 wt. % and the second polyamide can be present in the oxygen scavenging layer 22 from about 10 wt. % to about 98 wt. %. The first polyamide may be present in the oxygen scavenging layer 22 from about 5 wt. % to about 45 wt. % and the second polyamide can be present in the oxygen scavenging layer 22 from about 55 wt. % to about 95 wt. %. The first polyamide may be present in the oxygen scavenging layer 22 from about 5 wt. % to about 15 wt. % and the second polyamide can be present in the oxygen scavenging layer 22 from about 85 wt. % to about 95 wt. %. The foregoing weight percentages are of the overall oxygen scavenging layer 22.

The metal salt catalyst can be an oxidation promoting catalyst. The metal salt catalyst may be a low molecular weight oxidation promoting metal salt catalyst. The metal salt catalyst may include a cobalt, copper, or ruthenium ion. The metal salt catalyst may include a counterion which is present in acetates, stearates, propionates, butyrates, pentanoates, hexanoates, octanoates, nonanonates, neodecanoates, undecanoates, dodecanotates, linoleates, benzoates, salicylates, and cinnamates and combinations thereof. The metal salt catalyst may include cobalt carboxylate, ruthenium carboxylate, and/or copper carboxylate. The metal salt catalyst may include cobalt carboxylate. The metal salt catalyst may include cobalt stearate.

The metal salt catalyst may be present in the oxygen scavenging layer 22 in as little as 0.001 wt. %, 0.002 wt. %, 0.005 wt. %, 0.01 wt. %, or 0.015 wt. %, or as much as 0.1 wt. %, 0.2 wt. %, 0.5 wt. %, 0.7 wt. % or 1 wt. %, or may be within any range defined between any two of the foregoing values, such as 0.001 wt. % to 1 wt. %, 0.002 wt. % to 0.7 wt. %, 0.005 wt. % to 0.5 wt. %, 0.01 wt. % to 0.2 wt. %, or 0.015 wt. % to 0.1 wt. %, for example. The foregoing weight percentages are of the overall oxygen scavenging layer 22.

As used herein, the phrase "within any range defined between any two of the foregoing values" literally means that any range may be selected from any two of the values listed prior to such phrase regardless of whether the values are in the lower part of the listing or in the higher part of the listing. For example, a pair of values may be selected from two lower values, two higher values, or a lower value and a higher value.

The oxygen scavenging layer 22 may further include an additional polymer component. This additional polymer component may include additional polyamides and polyamide copolymers, polyethylene terephthalate and PET copolymers, polyolefins, acrylonitrile copolymers, acrylic polymers, vinyl polymers, polycarbonate and polystyrene.

The oxygen scavenging layer 22 may further include a polybutadiene. The polybutadiene may be a copolymer including about 5 mol. % maleic anhydride moieties and about 95 mol. % butadiene moieties with a degree of polymerization from about 1,000 monomer units to about 5,000 monomer units. Without wishing to be bound by any theory, it is believed that the polybutadiene may react with oxygen quickly in the presence of the metal salt catalyst and function as an initiator for the oxidation of the second polyamide. However, it has been found that at high heat treatment temperatures, the polybutadiene may be detrimental to the oxygen absorption of the oxygen scavenging layer.

The polybutadiene may be present in the oxygen scavenging layer 22 from in as little as 0.1 wt. %, 0.2 wt. %, 0.3 wt. %, 0.5 wt. %, or 0.7 wt. %, or as much as 1 wt. %, 2 wt. %, 3 wt. %, 5 wt. %, 7 wt. % or 10 wt. %, or may be within any range defined between any two of the foregoing values, such as 0.1 wt. % to 10 wt. %, 0.2 wt. % to 7 wt. %, 0.5 wt. % to 5 wt. %, 0.2 wt. % to 0.5 wt. %, or 0.5 wt. % to 3 wt. %, for example. The foregoing weight percentages are of the overall oxygen scavenging layer 22.

The polyamide layer 24 may include a third polyamide. The third polyamide can include any homopolymers or copolymers selected from aliphatic polyamides, aliphatic/aromatic polyamides and mixtures thereof, as described above for the first polyamide of the oxygen scavenging layer 22. The third polyamide may include Nylon 6, Nylon 66, Nylon 6/66, Nylon 66/6, Nylon MXD6, or Nylon 61,6T or mixtures thereof. The third polyamide may include Nylon 6, Nylon 66, Nylon 6/66 or 66/6 and mixtures thereof. Without wishing to be bound by any theory, it is believed that the polyamide layer 24 may serve as a protective layer for the EVOH polymer layer 20 by not only strengthening the EVOH polymer layer 20, but also by absorbing moisture from the EVOH polymer layer 20 after a heat treatment process. It is believed that absorbing moisture from the EVOH polymer layer 20 may help the EVOH polymer layer 20 more quickly recover its oxygen barrier properties.

A thickness of the polyamide layer 24 may be as little as 1 micron, 1.5 microns, 2 microns, 2.5 microns, 3 microns, 4 microns, or 6 microns or as great as 8 microns, 10 microns, 12 microns, 15 microns, 20 microns, or 25 microns, or may be within any range defined between any two of the foregoing values, such as 1 micron to 25 microns, 1.5 microns to 20 microns, 2 microns to 15 microns, 2.5 microns to 12 microns, 3 microns to 10 microns, 4 microns to 8 microns, 2 microns to 20 microns, or 2.5 microns to 15 microns, for example.

The first polyolefin layer 26 and the second polyolefin layer 30 may include ethylene vinyl acetate, ethylene acrylic acid, or an ionomer. The first polyolefin layer 26 and the second polyolefin layer 30 may include polypropylene. The first polyolefin layer 26 and the second polyolefin layer 30 may include a polyethylene such as a high (HDPE), a medium (MDPE), a low (LDPE), or a linear low (LLDPE) density polyethylene. In some embodiments, the first polyolefin layer 26 and the second polyolefin layer 30 include the same polymer. In some embodiments, the first polyolefin layer 26 and the second polyolefin layer 30 include different polymers.

A thickness of either of the first polyolefin layer 26 and the second polyolefin layer may be as little as 2.5 microns, 3.5 microns, 5 microns, 7.5 microns, 10 microns, or 15 microns, or as great as 25 microns, 35 microns, 50 microns, 70 microns, 100 microns, or 150 microns, or may be within any range defined between any two of the foregoing values, such as 2.5 micron to 150 microns, 3.5 microns to 100 microns, 5 microns to 70 microns, 7.5 microns to 50 microns, 10 microns to 35 microns, 15 microns to 20 microns, 10 microns to 50 microns, or 25 microns to 50 microns, for example.

The first tie layer 28 and the second tie layer 32 may include adhesive polymers such as modified polyolefin compositions having at least one functional moiety selected from the group consisting of unsaturated polycarboxylic acids and anhydrides thereof. Such unsaturated carboxylic acid and anhydrides can include maleic acid and anhydride, fumaric acid and anhydride, crotonic acid and anhydride, citraconic acid and anhydride, itaconic acid and anhydride. The modified polyolefins can include compositions described in U.S. Pat. Nos. 3,481,910; 3,480,580; 4,612,155 and 4,751,270..

The functional moiety may be present in the modified polyolefins in as little as 0.001 wt. %, 0.002 wt. %, 0.005 wt. %, 0.01 wt. %, 0.02 wt. %, or 0.05 wt. %, or as great as 0.1 wt. %, 0.2 wt. %, 0.5 wt. %, 1 wt. %, 2 wt. %, 5 wt. %, or 10 wt. %, or may be within any range defined by any two of the foregoing values, such as 0.001 wt. % to 10 wt. %, 0.002 wt. % to 5 wt. %, 0.005 wt. % to 2 wt. %, 0.01 wt. % to 1 wt. %, 0.02 wt. % to 0.5 wt. %, 0.05 wt. % to 0.2 wt. %, 0.005 wt. % to 5 wt. %, or 0.01 wt. % to 2 wt. %, for example. The foregoing weight percentages are of the total weight of the modified polyolefin.

The first tie layer 28 and the second tie layer 32 may include alkyl ester copolymers of olefins and alkyl esters of α,β-ethylenically unsaturated carboxylic acids such as those described in U.S. Pat. No. 5,139,878.

A thickness of either of the first tie layer 28 and the second tie layer 32 may be as little as 1 micron, 1.5 microns, 2 microns, 2.5 microns, 3 microns, or 4 microns, or as great as 6 microns, 8 microns, 10 microns, 15 microns, 20 microns, or 25 microns, or may be within any range defined between any two of the foregoing values, such as 1 micron to 25 microns, 1.5 microns to 20 microns, 2 microns to 15 microns, 2.5 microns to 10 microns, 3 microns to 8 microns, 4 microns to 6 microns, 2 microns to 20 microns, or 2.5 microns to 10 microns, for example.

In FIG. 2, the polyamide layer 24 is disposed on an exterior-facing side of the EVOH polymer layer 20 and the oxygen scavenging layer 22 is disposed on an interior-facing side of the EVOH polymer layer 20 opposite the exterior-facing side of the EVOH polymer layer 20. The first polyolefin layer 26 is bonded to an interior-facing side of the oxygen scavenging layer 22 by the first tie layer 28. The second polyolefin layer 30 is bonded to an exterior-facing side of the polyamide layer 24 by the second tie layer 32. In FIG. 2, an interior-facing surface of the first polyolefin layer 26 is also in an interior surface of the laminate film 12, and an exterior-facing surface of the second polyolefin layer 30 is an exterior surface of the laminate film 12.

In some embodiments, the polyamide layer 24 may be omitted. In such embodiments, the second polyolefin layer 30 can be bonded to the exterior-facing side of the EVOH polymer layer 20 by the second tie layer 32.

Considering FIGS. 1 and 2 together, in use, the package 10 can be sealed with the oxygen-sensitive material 18 in the interior 16 of the package 10, forming a retort pouch. The sealed package 10 can be exposed to a heat treatment to sterilize the package 10 and the oxygen-sensitive material 18 within. The sterilized package 10 can be cooled.

The heat treatment may be at a temperature as low as 50°C, 55°C, 60°C, 65°C, 70°C, 75°C, 80°C, 85°C, 90°C, 95°C, 100°C, 105°C, 110°C, 115°C, or 119°C, or as high 120°C, 123°C, 125°C, 130°C, 135°C, 140°C, 145°C, 150°C, 155°C, or 160°C, or may be within any range defined between any two of the foregoing values, such as 50°C to 150°C, 80°C to 150°C, 80°C to 130°C, 90°C to 150°C, 100°C to 140°C, or 119°C to 123°C, for example.

The heat treatment may be at a relative humidity as low as 90%, 92%, or 94%, or as high as 96%, 98%, or 100%, or may be within any range defined between any two of the foregoing values, such as 90% to 100%, 92% to 98%, 94% to 96%, or 98% to 100%, for example.

The heat treatment may be at an absolute pressure as low as 600 Torr, 700 Torr, 800 Torr, 1,000 Torr, 1,200 Torr, or 1,400 Torr, or as high as 1,600 Torr, 1,900 Torr, 2,200 Torr, 2,600 Torr, 3,000 Torr, or 3,600 Torr, or may be within any range defined between any two of the foregoing values, such as 600 Torr to 3,600 Torr, 700 Torr to 3,000 Torr, 800 Torr to 2,600 Torr, 1,000 Torr to 2,200 Torr, 1,200 Torr to 1,900 Torr, or 1,400 Torr to 1,600 Torr, for example.

Exposing the package 10 to the heat treatment can cause the EVOH polymer layer 20 to substantially lose its oxygen barrier properties. As noted above, it is believe that a loss of crystallinity in the EVOH polymer layer 20 due to the heat treatment may cause a loss of crystallinity which make the EVOH polymer layer 20 permeable to oxygen. The heat treatment may also activate the oxygen scavenging layer 22, causing the oxygen scavenging layer 22 to scavenge oxygen as it passes through the temporarily oxygen-permeable EVOH polymer layer 20. A thickness of the oxygen scavenging layer 22 may be sufficient to scavenge oxygen at least until the oxygen barrier properties of the EVOH polymer layer 20 are restored.

Thus, laminate films described according to this disclosure can exhibit excellent oxygen barrier properties. An oxygen transmission rate through the laminate film 12 24 hours after the heat treatment may be as low as 0.05 cc/m² per day (cc/m²-day), 0.1 cc/m²-day, 0.2 cc/m²-day, 0.3 cc/m²-day, or 0.4 cc/m²-day, or as high as 0.5 cc/m²-day, 0.6 cc/m²-day, 0.7 cc/m²-day, 0.8 cc/m²-day, 0.9 cc/m²-day, or 1 cc/m²-day, or may be within any range defined between any two of the foregoing values, such as 0.05 cc/m²-day to 1 cc/m²-day, 0.1 cc/m²-day to 0.9 cc/m²-day, 0.2 cc/m²-day to 0.8 cc/m²-day, 0.3 cc/m²-day to 0.7 cc/m²-day, 0.4 cc/m²-day to 0.6 cc/m²-day. The oxygen transmission rate may be measured using the procedures of ASTM D-3985 at 23°C, 85% relative humidity, and 100% oxygen at atmospheric pressure.

The oxygen transmission rate through an EVOH polymer layer with its oxygen barrier properties intact is believed to be about 0.5 cc/m²-day. The oxygen transmission through the laminate film 12 24 hours after the heat treatment may be less than 0.5 cc/m²-day, 0.4 cc/m²-day 0.3 cc/m²-day, 0.2 cc/m²-day, 0.1 cc/m²-day, or 0.05 cc/m²-day.

FIG. 3 is a schematic cross-section of another laminate film for use in the package 10 of FIG. 1, according to this disclosure. FIG. 3 shows a laminate film 34 including a first EVOH polymer layer 36, a second EVOH polymer layer 38, an oxygen scavenging layer 40, a first polyolefin layer 42, a first tie layer 44, a second polyolefin layer 46, and a second tie layer 48. The first EVOH polymer layer 36 and the second EVOH polymer layer 38 may be as described above in reference to FIG. 2 for the EVOH polymer layer 20. The oxygen scavenging layer 40, the first polyolefin layer 42, the first tie layer 44, the second polyolefin layer 46, and the second tie layer 48 may be according to their corresponding layers described above in reference to FIG. 2.

In FIG. 3, the first EVOH polymer layer 36 is disposed on an interior-facing side of the oxygen scavenging layer 40 and the second EVOH polymer layer 38 is disposed on an exterior-facing side of the oxygen scavenging layer 40 opposite the interior-facing side of the oxygen scavenging layer 40. The first polyolefin layer 42 is bonded to an interior-facing side of the first EVOH polymer layer 36 by the first tie layer 44. The second polyolefin layer 46 is bonded to an exterior-facing side of the second EVOH polymer layer 38 by the second tie layer 48. In FIG. 3, an interior-facing surface of the first polyolefin layer 42 is also in an interior surface of the laminate film 34, and an exterior-facing surface of the second polyolefin layer 46 is an exterior surface of the laminate film 34.

Alternatively, one or more adhesive polymers may be directly blended or coextruded into some layers of the laminate films as descried above and the tie layers omitted, thus providing adhesion while minimizing the number of layers in the film.

A composition for use in the oxygen scavenging layer can be produced via melt extrusion compounding of the first polyamide and the second polyamide, as well as the metal salt catalyst. The composition may be formed by dry blending solid particles or pellets of each of the polyamide components and then melt blending the mixture and any other components in a suitable mixing means such as an extruder, a roll mixer.

Typical melting temperatures for the composition may be as low as 230°C, 235°C, or 240° C, or as high as 260°C, 280°C, or 300°C, or may be within any range defined between any two of the foregoing values, such as 230°C to 300° C, 235° C to 280° C, or 240° C to 260° C, for example.

Blending is preferably conducted for a period of time suitable to attain a substantially uniform blend. Such may easily be determined by those skilled in the art. If desired, the composition may be cooled and cut into pellets for further processing, may be extruded into a fiber, a filament, or a shaped element, or may be formed into films and optionally uniaxially or biaxially stretched or oriented by means well known in the art.

The laminate films of this disclosure may be used to produce various articles, bottles and containersusing conventional processing techniques, including extrusion, lamination, extrusion lamination, coinjection, stretch blow molding, coextrusion blow molding, injection stretch blow molding, coinjection stretch blow molding and via thermoforming techniques.

Processing techniques for making laminate films, sheets, containers and bottles are all well known in the art. For example, the first polyamide and the second polyamide of the oxygen scavenging layer may be pre-blended and then the blend fed into one or more of the infeed hoppers of an extruder, or each component may be fed into infeed hoppers of an extruder and then blended in the extruder. The materials for the other individual layers, as described above in reference to FIGS. 2-4, can be fed into infeed hoppers of the extruders of like number, each extruder handling the materials for one or more of the layers. The melted and plasticated streams from the individual extruders can be fed into a single manifold co-extrusion die. While in the die, the layers are juxtaposed and combined, then emerge from the die as a single multiple layer film of polymeric material. After exiting the die, the film can be cast onto a first controlled temperature casting roll, pass around the first controlled temperature casting roll, and then onto a second controlled temperature roll, which is normally cooler than the first controlled temperature casting roll. The controlled temperature rolls largely control the rate of cooling of the film after it exits the die. Once cooled and hardened, the resulting laminate film may be substantially transparent.

In some embodiments, the laminate film may be made by a blown film apparatus including a multi-manifold circular die head for a bubble blown laminate film through which the plasticized materials can be forced and formed into a laminate film bubble which may ultimately be collapsed and formed into the laminate film. Processes of coextrusion to form film and sheet laminates are generally known. See for example in "Modern Plastics Encyclopedia", Vol. 56, No. 10A, pp. 131-132, McGraw Hill, October 1979. Alternatively, individual layers may first be formed into sheets and then laminated together under heat and pressure with or without intermediate adhesive layers.

The laminate films of this disclosure may be formed as a pouch, bottle or container which includes one or more layers of another thermoplastic polymer such as polyesters, particularly polyethylene terephthalate (PET) and PET copolymers, polyolefins, ethylene vinyl alcohol copolymers, acrylonitrile copolymers, acrylic polymers, vinyl polymers, polycarbonates, polystyrenes, polyamides and fluoropolymers. The laminate films of this disclosure are particularly suitable as barrier layers in the construction and fabrication of multilayer bottles and thermoformed containers in which PET or polyolefin layers function as structural layers. Such PET/polyamide multilayer bottles can be made by coinjection stretch blow molding processes similar to the injection stretch blow molding process as described above. Similarly, such multilayer bottles can be made by coextrusion blow molding. The latter process usually employs suitable optional adhesive tie layers for adhesion.

Useful polyesters for coinjection stretch blow molding process include polyethylene terephthalate and its copolymers in the intrinsic viscosity (I.V.) range of about 0.5 to about 1.2 dl/g, more preferably in the I.V. range of from about 0.6 to about 1.0 dl/g and most preferably in the I.V. range of from about 0.7 to about 0.9 dl/g. The polyolefins used in coextrusion blow molding preferably comprise polymers of alpha-olefin monomers having from about 2 to about 6 carbon atoms, and includes homopolymers, copolymers (including graft copolymers), and terpolymers of alpha-olefins. Examples of such nonexclusively include ultra-low density polyethylene (ULDPE); low density polyethylene (LDPE); linear low density polyethylene (LLDPE); metallocene linear low density polyethylene (m-LLDPE); medium density polyethylene (MDPE); high density polyethylene (HDPE); polypropylene; polybutylene; polybutene-1; poly-3-methylbutene-1; poly-pentene-1; poly-4-methylpentene-1; polyisobutylene; and polyhexene. Such polyolefins may have a weight average molecular weight of from about 1,000 to about 1,000,000, and preferably of from about 10,000 to about 500,000. The polyolefins may include polyethylene, polypropylene, polybutylene and copolymers and blends thereof.

The laminate films described according to this disclosure and packages according to this disclosure may optionally also include one or more conventional additives whose uses are well known to those skilled in the art. The use of such additives may be desirable in enhancing processing as well as improving the products or articles formed therefrom. Examples of such include oxidative and thermal stabilizers, lubricants, mold release agents, flame-retarding agents, oxidation inhibitors, dyes, pigments and other coloring agents, ultraviolet light stabilizers, organic or inorganic fillers including particulate and fibrous fillers, reinforcing agents, nucleators, plasticizers, as well as other conventional additives known to the art. Such additives may be used in amounts of up to about 10% by weight of the laminate films and packages including laminate films.

The laminate films produced according to the present disclosure may be oriented by stretching or drawing the films at draw ratios of from about 1.1:1 to about 10:1, and preferably at a draw ratio of from about 2:1 to about 5:1. The term "draw ratio" as used herein indicates the increase of dimension in the direction of the draw. Therefore, a film having a draw ratio of 2:1 has its length doubled during the drawing process. Generally, the film is drawn by passing it over a series of preheating and heating rolls. The heated film moves through a set of nip rolls downstream at a faster rate than the film entering the nip rolls at an upstream location. The change of rate is compensated for by stretching in the film.

The films may be stretched or oriented in any desired direction using methods well known to those skilled in the art. The film may be stretched uniaxially in either the longitudinal direction coincident with the direction of movement of the film being withdrawn from the film forming apparatus, also referred to in the art as the "machine direction", or in a direction which is perpendicular to the machine direction, and referred to in the art as the "transverse direction", or biaxially in both the longitudinal direction and the transverse direction. The films may be further annealed or heat treated to further enhance their barrier properties. Heated fluids or IR radiation heaters can be utilized in the annealing or heat treatment processes. Such techniques are well known in the art.

The laminate films according to the present disclosure may have a thickness as low as 5 µm, 10 µm, 15 µm, 20µm, 30 µm, 40 µm, 50 µm, or 60 µm, or as high as 75 µm, 100 µm, 150 µm, 200 µm, 300 µm, or 400 µm, or may be within any range defined between any two of the foregoing values, such as 5 µm to 400 µm, 10 µm to 200 µm, 15 µm to 100 µm, 60 µm to 300 µm, 75 µm to 150 µm, or 100 µm to 200 µm, for example. While such thicknesses are preferred as providing a readily flexible film, it is to be understood that other film thicknesses may be produced to satisfy a particular need and yet fall within the scope of the present invention. Such thicknesses which are contemplated include plates, thick films, and sheets which are not readily flexible at room temperature (approx. 20° C).

Should a non-flexible article be desired, such as a bottle, a glass transition temperature (Tg) of the polymer layers of the laminate films, as determined by differential scanning calorimetry techniques, may be as low as 20°C, 40°C, or 60°C, or as high as 90°C, 100°C, or 110°C, or may be within any range defined between any two of the foregoing values, such as 20° C to 110° C, 40° C to 100° C, or 60° C to 90° C, for example.

A temperature of 120° C is generally the upper temperature limit for neat PET's reheat stretch blow moldability into distortion-free bottles. In addition, in coinjection stretch blow molding processes for making multilayer bottles, extensive voiding with potential oxygen barrier property loss might occur if the Tg of the polymer layers of the laminate films exceeds about 110° C.

### EXAMPLES

### Example 1 - Laminate Film Oxygen Transmission Rate

A seven-layer laminate film as shown and described above in reference to FIG. 2 was formed by coextrusion through a blown film apparatus as described above. The oxygen scavenging layer consisted of 68 wt. % polycaprolactam (Nylon 6) as the first polyamide, 30 wt. % of the second polyamide, 2 wt. % of polybutadiene, and 230 ppm of cobalt stearate catalyst. The second polyamide, also referred to as an oxidizable Nylon, consisted of 50 mol. % of m-xylylene diamine moiety, 12 mol. % of the isophthalic acid moiety, and 38 mol. % of an adipic acid moiety. The polyamide layer consisted of Nylon 6. The first polyolefin layer and the second polyolefin layer each consisted of polypropylene. The first tie layer and the second tie layer each consisted of BYNEL^{®} 41E687, a linear low-density polyethylene (LLDPE) from E.I. du Pont de Nemours and Company, Inc.

The EVOH polymer layer was 9.6 µm thick. The oxygen scavenging layer was 12 µm thick. The polyamide layer was 12 µm thick. The first polyolefin layer was 21.6 µm thick and the second polyolefin layer was 12 µm thick. The first tie layer and the second tie layer were each 1.6 µm thick. The total thickness of the laminate film was about 80 µm.

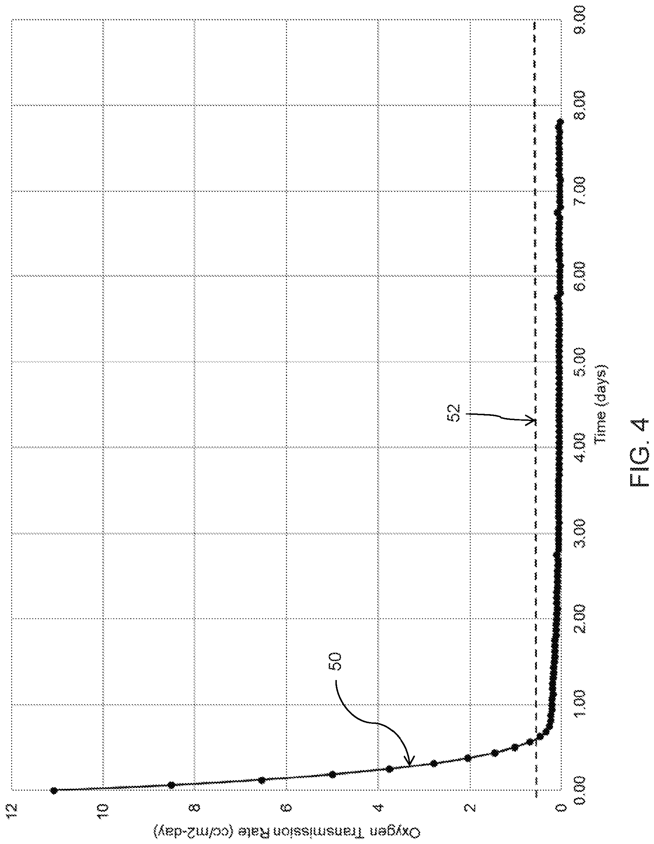

The laminate film was subjected to a heat treatment consisting of immersing in a water bath at 90°C for 30 minutes. Immediately after the heat treatment, the oxygen transmission rate of the laminate film was measured on a Mocon Oxy-Tran, model 2/21, per the ASTM D3985 oxygen permeation test. The testing conditions were 23°C, at 85% relative humidity, with 100% oxygen at atmospheric pressure. The results are shown in FIG. 4.

FIG. 4 is a graph of the oxygen transmission rate through the laminate film as a function of time after the heat treatment. Line 50 shows the oxygen transmission rate for about 7.8 days. As a reference, line 52 shows the expected oxygen transmission rate of a laminate film without the oxygen scavenging layer and the same thickness of the EVOH polymer layer but not exposed to a heat treatment (i.e. its oxygen barrier properties are fully intact) which is 0.5 cc/m²-day. As shown in FIG. 4, the initially high oxygen transmission rate due to the compromised condition of the EVOH polymer layer drops quickly as the oxygen scavenging layer activates. The laminate film quickly recovers from the initial high oxygen transmission rate to below 0.5 cc/m²-day after about 16 hours. Over the next seven days, the laminate film maintains an oxygen transmission rate well below 0.3 cc/m²-day. It is expected that eventually the oxygen transmission rate of the laminate film will increase to that of the EVOH polymer layer with its oxygen barrier properties are fully intact as the oxygen absorption capacity of the oxygen scavenging layer is depleted.

### Example 2 - Laminate Film Oxygen Transmission Rate Comparison

A seven-layer laminate film as shown and described above in reference to FIG. 2 was formed by coextrusion through a blown film apparatus as described above. The oxygen scavenging layer consisted of 68 wt. % Nylon 6 as the first polyamide, 30 wt. % of the second polyamide, 2 wt. % of polybutadiene, and 230 ppm of cobalt stearate catalyst. The second polyamide, also referred to as an oxidizable Nylon, consisted of 50 mol. % of m-xylylene diamine moiety, 12 mol. % of the isophthalic acid moiety, and 38 mol. % of an adipic acid moiety. The polyamide layer consisted of Nylon 6/66. The first polyolefin layer and the second polyolefin layer each consisted of polyethylene. The first tie layer and the second tie layer each consisted of LLDPE (BYNEL^{®} 41E687).

The EVOH polymer layer was 7 µm thick. The oxygen scavenging layer was 11 µm thick. The polyamide layer was 11 µm thick. The first polyolefin layer and the second polyolefin layer were each 38 µm thick. The first tie layer and the second tie layer were each 2.5 µm thick. The total thickness of the laminate film was about 110 µm.

A second seven-layer laminate control film was formed in identical fashion to the laminate film described immediately above, except that it includes an 11 µm thick layer of Nylon 6/66 in place of the oxygen scavenging layer.

The laminate film and the control laminate film were subjected to a heat treatment consisting of immersing in a water bath at 90°C for 40 minutes. Immediately after the heat treatment, the oxygen transmission rates of the laminate film and the control laminate film were measured on a Mocon Oxy-Tran, model 2/21, per the ASTM D3985 oxygen permeation test. The testing conditions were 23°C, at 85% relative humidity, with 100% oxygen at atmospheric pressure. The results are shown in FIG. 45

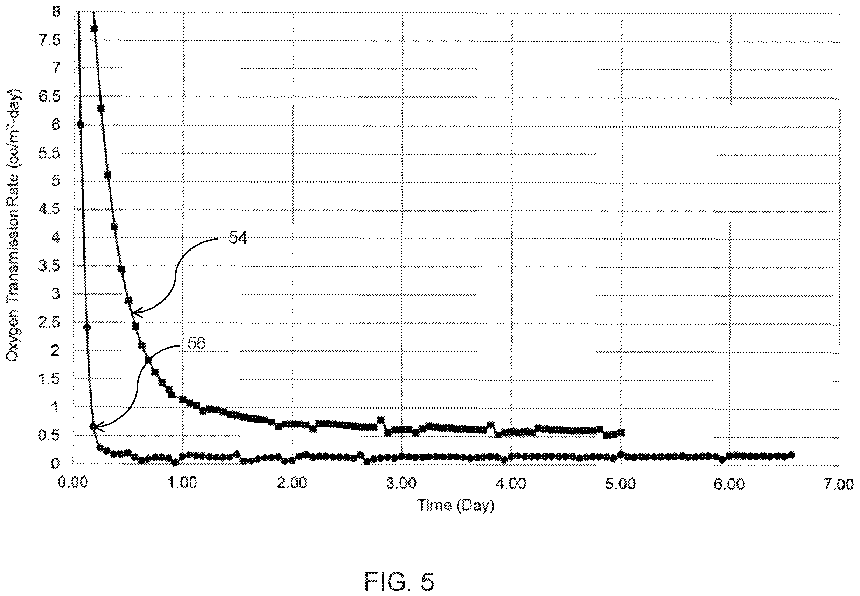

FIG. 5 is a graph of the oxygen transmission rates through the laminate film and the control laminate film as a function of time after the heat treatment. Line 54 shows the oxygen transmission rate of the control laminate film for about 5 days. Line 56 shows the oxygen transmission rate of the laminate film for about 6.6 days. As shown by line 56 in FIG. 5, the laminate film quickly recovers from the initial high oxygen transmission rate to below 0.5 cc/m²-day after only 8 hours. Over the next six days, the laminate film maintains an oxygen transmission rate well below 0.3 cc/m²-day. In contrast, line 54 clearly shows evidence of the retort shock suffered by the control laminate film. After 8 hours, the control laminate film still has an oxygen transmission rate over 6 cc/m²-day. This is about 23 times greater than the oxygen transmission rate of the laminate film after the same length of time. The effect of the retort shock persists as the oxygen transmission rate does not level off until about 1.5-2 days. It is expected that eventually the oxygen transmission rate of the laminate film will increase to that of the control laminate film as the oxygen absorption capacity of the oxygen scavenging layer is depleted.

### Example 3 - Oxygen Scavenging Layer Capacity Before and After a Heat Treatment

A first sample and a second sample of oxygen scavenging compositions for use as an oxygen scavenging layer were made, each sample having a different concentration of metal salt catalyst. For each sample, pellets of Nylon 6, oxidizable Nylon, and a cobalt masterbatch were weighed out and then tumbled together for several minutes to ensure thorough mixing. The cobalt masterbatch included 5 wt. % cobalt stearate melt compounded with 95 wt. % Nylon 6 using a twin screw extruder. The weigh percentages were 40 wt. % of the Nylon 6 and 60 wt. % of the oxidizable Nylon. In the first sample, the cobalt masterbatch was added to achieve a catalyst concentration of 256 ppm. In the second sample, the cobalt masterbatch was added to achieve a catalyst concentration of 71 ppm.

Each of the two samples were separately extruded through a Haake 18 mm single screw extruder equipped with a 152.4 mm wide slit film die. The extruder temperature profile was set for a range of 230°C to 260°C. The melt extrudate passed through the film die and was film cast onto a Killion cast roll water cooled to a temperature of 37.8°C. The cast roll speed and the extruder screw speed were adjusted to achieve a monolayer film thickness between 0.0508 mm and 0.0635 mm.

Two test films from each of the two samples were produced for a total of four test films. Two of the test films, one test film from each of the two samples, were subjected to a heat treatment that simulated a retort process. The two test films for heat treatment were placed within an Instant Pot^{®} electric pressure cooker and suspended over water within the pressure cooker. The test films were heat treated for 30 minutes, at 100 % relative humidity at an absolute pressure ranging from 1288 Torr to 1360 Torr.

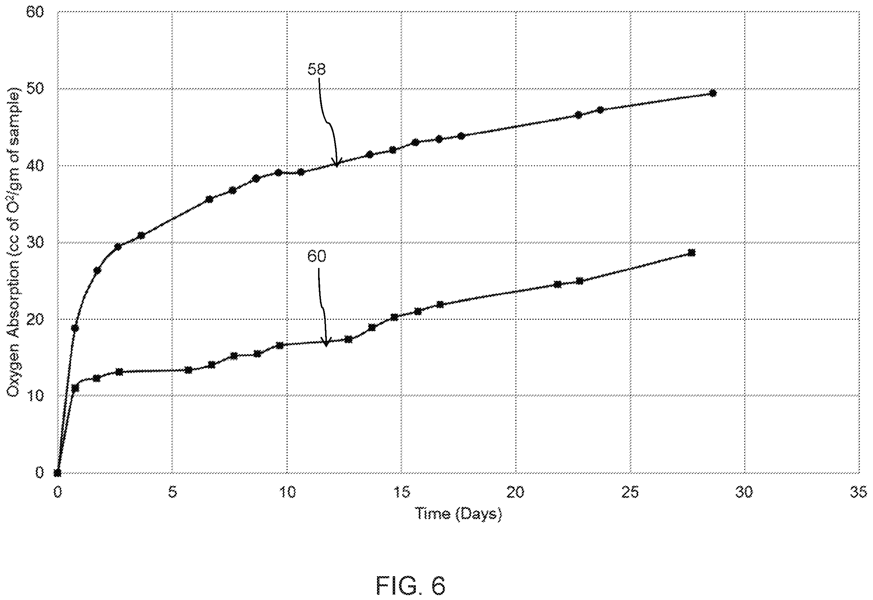

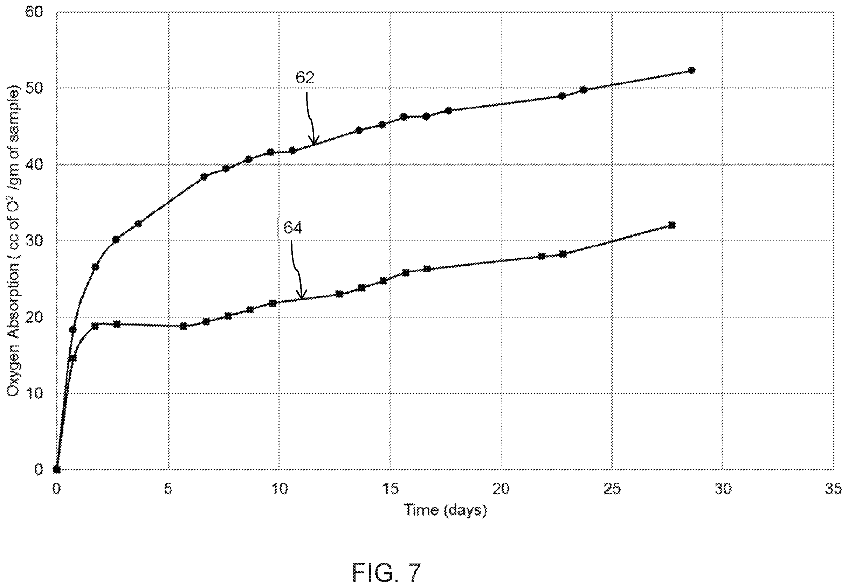

Each of the four test films were weighed and then placed into four separate clear glass canning jars have a 240 ml volume with 0.1 g of water before sealing each jar with a metal lid and foil tape to create a 100% relative humidity environment. Before sealing, an OxyDot (O2xyDot^{®}) from OxySense^{®} was attached to an inside glass surface of each jar. The oxygen concentration within each jar was monitored by an OxySense^{®} model 5250I. The change in measured oxygen concentration was converted to grams of oxygen absorbed by the test films. The results are shown in FIGS. 6 and 7.

FIG. 6 shows the oxygen absorption of test films from the first sample including 256 ppm of cobalt catalyst. Line 58 shows the oxygen absorption of the test film that was not heat treated. Line 60 shows the oxygen absorption of the test sample that was heat treated. As shown in FIG. 6, the first sample retains over 28 cc of oxygen absorbed per gram of test film even after the heat treatment.

FIG. 7 shows the oxygen absorption of test films from the second sample including 71 ppm of cobalt catalyst. Line 62 shows the oxygen absorption of the test film that was not heat treated. Line 64 shows the oxygen absorption of the test sample that was heat treated. As shown in FIG. 7, the first sample retains over 32 cc of oxygen absorbed per gram of test film even after the heat treatment.

### Example 4 - Oxygen Scavenging Layer Capacity for Various Proportions of First and Second Polyamides, Catalyst Concentrations and Optional Polyisobutylene

Five samples (X1, X2, X3, X4, X5) of oxygen scavenging compositions for use as an oxygen scavenging layer were made as described above for Example 3. Each sample had a different proportion of the first polyamide, Nylon 6, and the second polyamide, oxidizable Nylon. The metal salt catalyst cobalt stearate was prepared and added as described in Example 3. The concentration the catalyst varied with the proportion of the oxidizable Nylon such that the ratio of the catalyst to the oxidizable Nylon was the same in each of the five samples. None of the five samples included polybutadiene. A sixth sample (Y) of an oxygen scavenging composition was also prepared with a composition as described in Example 1, including 2 wt. % polybutadiene. The compositions of each of the six samples is shown in Table 1 below.

**Table 1**

| **Sample** | **X1** | **X2** | **X3** | **X4** | **X5** | **Y** |
|---|---|---|---|---|---|---|
| **Nylon 6 (wt.%)** | 10% | 28% | 46% | 64% | 82% | 68% |
| **Oxidizable Nylon (wt.%)** | 90% | 72% | 54% | 36% | 18% | 30% |
| **Catalyst (ppm)** | 470 | 376 | 282 | 188 | 94 | 225 |
| **Polybutadiene (wt.%)** | 0% | 0% | 0% | 0% | 0% | 2% |

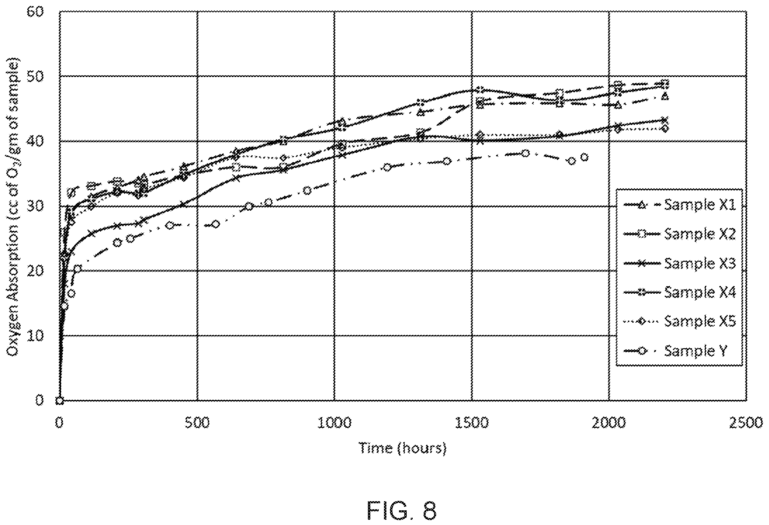

Each of the six samples were separately extruded to produce six films between 0.0254 mm and 0.0508 mm, as described above in Example 3. Each of the films were cut to produce a known mass, weighed and then placed into six separate clear glass canning jars have a 240 mL volume with 0.1 g of water before sealing each jar with a metal lid and foil tape to create a 100% relative humidity environment. Before sealing, an OxyDot (O2xyDot^{®}) from OxySense^{®} was attached to an inside glass surface of each jar. The oxygen concentration within each jar was monitored by an OxySense^{®} model 5250I. The change in measured oxygen concentration was converted to grams of oxygen absorbed by the test films. The results are shown in FIG. 8.

FIG. 8 shows the oxygen absorption of the five samples X1, X2, X3, X4, and X5 up to 2,205 hours of testing, the oxygen absorption of the sixth sample Y up to 1,913 hours. As shown in FIG. 8, the oxygen absorption in the first 10 to 20 hours is very similar for the five samples X1, X2, X3, X4, and X5. The five samples also performed measurably better than the sixth sample Y which included polybutadiene. Thus, it appears that the polybutadiene is not necessary for effective oxygen scavenging compositions, and reduces the performance of oxygen scavenging compositions.

## Claims

1. A method of making a sterilized package containing an oxygen-sensitive material, the method comprising:
providing a package, the package including a laminate film including an ethylene vinyl alcohol polymer layer and an oxygen scavenging layer, the oxygen scavenging layer including a blend of a first polyamide including a crystallizable polyamide homopolymer, a crystallizable polyamide copolymer, or a blend thereof; and a second polyamide including an m-xylylene diamine moiety, an isophthalic acid moiety, and a polyamide monomeric diacid precursor moiety; and a metal salt catalyst;
sealing the oxygen-sensitive material in the package;
exposing the sealed package to a heat treatment to sterilize the package and the oxygen-sensitive material in the package; and
cooling the sterilized package.

2. The method of claim 1, wherein the heat treatment is at a temperature from 50°C to 150°C, a relative humidity of 90% to 100%, and a pressure of 600 Torr to 3,600 Torr absolute for a time from 30 to 60 minutes.

3. The method of claim 1 or claim 2, wherein exposing the sealed package to the heat treatment causes a loss of crystallinity in the ethylene vinyl alcohol polymer layer, and the oxygen scavenging layer scavenges oxygen passing through the laminate film at least until the ethylene vinyl alcohol polymer layer recrystallizes.

4. The method of any one of claims 1-3, wherein the heat treatment activates the oxygen scavenging layer.

5. The method of any one of claims 1-4, wherein the second polyamide includes 20 mol. % to 70 mol. % of the m-xylylene diamine moiety, 1 mol. % to 30 mol. % of the isophthalic acid moiety, and 20 mol. % to 60 mol. % of the polyamide monomeric diacid precursor moiety

6. The method of any one of claims 1-5 wherein an oxygen transmission rate measured per ASTM D3985 through the laminate film 24 hours after cooling the sterilized package is less than 0.3 cc/m² per day.

7. A package for storing oxygen-sensitive materials, the package comprising:
a laminate film separating an interior of the package from an exterior of the package, the laminate film including:
an ethylene vinyl alcohol polymer layer; and
an oxygen scavenging layer, the oxygen scavenging layer including a blend of:
a first polyamide including a crystallizable polyamide homopolymer, a crystallizable polyamide copolymer, or a blend thereof;
a second polyamide including:
an m-xylylene diamine moiety;
an isophthalic acid moiety; and
a polyamide monomeric diacid precursor moiety; and
a metal salt catalyst;
wherein the package is a retort pouch.

8. The package of claim 7, wherein the second polyamide includes:
20 mol. % to 70 mol. % of the m-xylylene diamine moiety;
1 mol. % to 30 mol. % of the isophthalic acid moiety; and
20 mol. % to 60 mol. % of the polyamide monomeric diacid precursor moiety.

9. The package of claim 7 or claim 8, wherein the laminate film further includes a polyamide layer disposed on a first side of the ethylene vinyl alcohol layer, wherein the polyamide layer includes a third polyamide, and the oxygen scavenging layer is disposed on a second side of the ethylene vinyl alcohol layer opposite the first side of the ethylene vinyl alcohol layer.

10. The package of claim 9, wherein the laminate film further includes:
a first polyolefin layer bonded to a side of the polyamide layer opposite the ethylene vinyl alcohol polymer layer by a first tie layer; and
a second polyolefin layer bonded to a side of the oxygen scavenging layer opposite the ethylene vinyl alcohol polymer layer by a second tie layer.

## Patentansprüche

1. Verfahren zur Herstellung einer sterilisierten Packung, die ein sauerstoffempfindliches Material enthält, wobei das Verfahren umfasst:
Bereitstellen einer Packung, wobei die Packung eine Laminatfolie einschließt, die eine Ethylen-Vinylalkohol-Polymerschicht und eine Sauerstoffabfangschicht einschließt, wobei die Sauerstoffabfangschicht ein Gemisch aus einem ersten Polyamid, das ein kristallisierbares Polyamidhomopolymer, ein kristallisierbares Polyamidcopolymer oder ein Gemisch davon einschließt; und einem zweiten Polyamid, das einen m-Xylylendiamin-Anteil, einen Isophthalsäure-Anteil und einen monomere Disäure-Vorläuferanteil von Polyamid einschließt; und einem Metallsalzkatalysator einschließt;
Versiegeln des sauerstoffempfindlichen Materials in der Packung;
Aussetzen der versiegelten Packung einer Wärmebehandlung, um die Packung und das sauerstoffempfindliche Material in der Packung zu sterilisieren; und
Kühlen der sterilisierten Packung.

2. Verfahren nach Anspruch 1, wobei die Wärmebehandlung bei einer Temperatur von 50 °C bis 150 °C, einer relativen Feuchtigkeit von 90 % bis 100 % und einem Druck von 600 Torr bis 3600 Torr absolut für eine Zeit von 30 bis 60 Minuten erfolgt.

3. Verfahren nach Anspruch 1 oder Anspruch 2, wobei Aussetzen der versiegelten Packung der Wärmebehandlung einen Verlust an Kristallinität in der EthylenVinylakohol-Polymerschicht bewirkt, und die Sauerstoffabfangschicht Sauerstoff, der die Laminatfolie passiert, mindestens bis zum erneuten Kristallisieren der Ethylen-Vinylalkohol-Polymerschicht abfängt.

4. Verfahren nach einem der Ansprüche 1 bis 3, wobei die Wärmebehandlung die Sauerstoffabfangschicht aktiviert.

5. Verfahren nach einem der Ansprüche 1 bis 4, wobei das zweite Polyamid 20 Mol. % bis 70 Mol. % des m-Xylylendiamin-Anteils, 1 Mol. % bis 30 Mol. % des Isophthalsäure-Anteils und 20 Mol. % bis 60 Mol. % des monomere Disäure-Vorläuferanteils des Polyamids einschließt.

6. Verfahren nach einem der Ansprüche 1 bis 5, wobei eine Sauerstoffdurchlässigkeit, gemessen gemäß ASTM D3985, durch die Laminatfolie hindurch 24 Stunden nach Abkühlen der sterilisierten Packung geringer als 0,3 cm³/m² pro Tag ist.

7. Packung zur Lagerung sauerstoffempfindlicher Materialien, wobei die Packung umfasst:
eine Laminatfolie, die ein Inneres der Packung von einem Äußeren der Packung trennt, wobei die Laminatfolie einschließt:
eine Ethylen-Vinylalkohol-Polymerschicht; und
eine Sauerstoffabfangschicht, wobei die Sauerstoffabfangschicht ein Gemisch einschließt aus:
einem ersten Polyamid, das ein kristallisierbares Polyamidhomopolymer, ein kristallisierbares Polyamidcopolymer oder ein Gemisch davon einschließt;
einem zweiten Polyamid, welches einschließt:
einen m-Xylylendiamin-Anteil;
einen Isophthalsäure-Anteil; und
einen monomere Disäure-Vorläuferanteil von Polyamid; und
einen Metallsalzkatalysator;
wobei die Packung ein Retortenbeutel ist.

8. Packung nach Anspruch 7, wobei das zweite Polyamid einschließt:
20 Mol. % bis 70 Mol. % des m-Xylylendiamin-Anteils;
1 Mol. % bis 30 Mol. % des Isophthalsäure-Anteils; und 20 Mol. % bis 60 Mol. % des monomere Disäure-Vorläuferanteils des Polyamids.

9. Packung nach Anspruch 7 oder Anspruch 8, wobei die Laminatfolie des Weiteren eine Polyamidschicht einschließt, die auf einer ersten Seite der Ethylen-Vinylalkohol-Schicht angeordnet ist, wobei die Polyamidschicht ein drittes Polyamid einschließt, und die Sauerstoffabfangschicht auf einer zweiten Seite der Ethylen-Vinylalkohol-Schicht gegenüber der ersten Seite der Ethylen-Vinylalkohol-Schicht angeordnet ist.

10. Packung nach Anspruch 9, wobei die Laminatfolie des Weiteren einschließt:
eine erste Polyolefinschicht, die mittels einer ersten Haftvermittlerschicht an eine Seite der Polyamidschicht gegenüber der Ethylen-Vinylalkohol-Polymerschicht gebondet ist; und
eine zweite Polyolefinschicht, die mittels einer zweiten Haftvermittlerschicht an eine Seite der Sauerstoffabfangschicht gegenüber der Ethylen-Vinylalkohol-Polymerschicht gebondet ist.

## Revendications

1. Procédé de préparation d'un emballage stérilisé contenant une matière sensible à l'oxygène, le procédé comprenant :
la mise à disposition d'un emballage, l'emballage comprenant un film stratifié comprenant une couche de polymère d'éthylène-alcool vinylique, une couche de piégeage d'oxygène, la couche de piégeage d'oxygène comprenant un mélange d'un premier polyamide comprenant un homopolymère de polyamide cristallisable, un copolymère de polyamide cristallisable ou un mélange correspondant ; et un deuxième polyamide comprenant un groupement m-xylylène diamine, un groupement acide isophtalique et un groupement précurseur de type diacide monomérique de polyamide ; et un catalyseur de type sel métallique ;
le scellement de la matière sensible à l'oxygène dans l'emballage ;
l'exposition de l'emballage scellé à un traitement thermique pour stériliser l'emballage et la matière sensible à l'oxygène dans l'emballage ; et
le refroidissement de l'emballage stérilisé.

2. Procédé selon la revendication 1, le traitement thermique étant à une température de 50 °C à 150 °C, une humidité relative de 90 % à 100 %, et une pression de 600 Torr à 3 600 Torr absolue pendant une durée de 30 à 60 minutes.

3. Procédé selon la revendication 1 ou la revendication 2, l'exposition de l'emballage scellé au traitement thermique causant une perte de cristallinité dans la couche de polymère d'éthylène-alcool vinylique, et la couche de piégeage d'oxygène piégeant de l'oxygène passant à travers le film stratifié au moins jusqu'à ce que la couche de polymère d'éthylène-alcool vinylique recristallise.

4. Procédé selon l'une quelconque des revendications 1 à 3, le traitement thermique activant la couche de piégeage d'oxygène.

5. Procédé selon l'une quelconque des revendications 1 à 4, le deuxième polyamide comprenant 20 % en moles à 70 % en moles du groupement m-xylylène diamine, 1 % en moles à 30 % en moles du groupement acide isophtalique, et 20 % en moles à 60 % en moles du groupement précurseur de type diacide monomérique de polyamide.

6. Procédé selon l'une quelconque des revendications 1 à 5, une vitesse de transmission d'oxygène mesurée selon la norme ASTM D3985 à travers le film stratifié 24 heures après le refroidissement de l'emballage stérilisé étant inférieure à 0,3 cm³/m² par jour.

7. Emballage pour le stockage de matières sensibles à l'oxygène, l'emballage comprenant :
un film stratifié séparant un intérieur de l'emballage d'un extérieur de l'emballage, le film stratifié comprenant :
une couche de polymère d'éthylène-alcool vinylique ; et
une couche de piégeage d'oxygène, la couche de piégeage d'oxygène comprenant un mélange de :
un premier polyamide comprenant un homopolymère de polyamide cristallisable, un copolymère de polyamide cristallisable, ou un mélange correspondant ;
un deuxième polyamide comprenant :
un groupement m-xylylène diamine ;
un groupement acide isophtalique ; et
un groupement précurseur de type diacide monomérique de polyamide ; et
un catalyseur de type sel métallique ;
l'emballage étant un sachet stérilisable.

8. Emballage selon la revendication 7, le deuxième polyamide comprenant :
20 % en moles à 70 % en moles du groupement m-xylylène diamine ;
1 % en moles à 30 % en moles du groupement acide isophtalique ; et
20 % en moles à 60 % en moles du groupement précurseur de type diacide monomérique de polyamide.

9. Emballage selon la revendication 7 ou la revendication 8, le film stratifié comprenant en outre une couche de polyamide disposée sur un premier côté de la couche d'éthylène-alcool vinylique, la couche de polyamide comprenant un troisième polyamide, et la couche de piégeage d'oxygène étant disposée sur un deuxième côté de la couche d'éthylène-alcool vinylique à l'opposé du premier côté de la couche d'éthylène-alcool vinylique.

10. Emballage selon la revendication 9, le film stratifié comprenant en outre :
une première couche de polyoléfine liée à un côté de la couche de polyamide à l'opposé de la couche de polymère d'éthylène-alcool vinylique par une première couche de liaison ; et
une deuxième couche de polyoléfine liée à un côté de la couche de piégeage d'oxygène à l'opposé de la couche de polymère d'éthylène-alcool vinylique par une deuxième couche de liaison.
